Europäisches Patentamt

European Patent Office

Office européen des brevets

(19)

(11) Numéro de publication: **0 201 405**
**B1**

(12) **FASCICULE DE BREVET EUROPEEN**

(45) Date de publication du fascicule du brevet: **04.04.90**

(21) Numéro de dépôt: **86400899.0**

(22) Date de dépôt: **24.04.86**

(51) Int. Cl.⁵: **B 23 P 19/06,** B 67 B 3/20

(54) **Dispositif de vissage à couple de serrage contrôlé.**

(30) Priorité: **26.04.85 FR 8506390**

(43) Date de publication de la demande:
**12.11.86 Bulletin 86/46**

(45) Mention de la délivrance du brevet:
**04.04.90 Bulletin 90/14**

(84) Etats contractants désignés:
**BE CH DE GB IT LI NL**

(56) Documents cités:
**EP-A-0 018 115**
**EP-A-0 087 373**
**GB-A-2 129 409**
**US-A-2 884 751**
**US-A-3 491 516**
**US-A-4 299 072**

(73) Titulaire: **S.A. SERAC (Société d'Etudes et de Réalisations d'Appareils de Conditionnement) Route de Mamers, B.P. 46 F-72402 LA FERTE-BERNARD (FR)**

(72) Inventeur: **Graffin, Jean-Jacques La Tasse d'en Bas F-72400 La Chapelle du Bois (FR)**

(74) Mandataire: **Fruchard, Guy et al CABINET BOETTCHER 23, rue la Boétie F-75008 Paris (FR)**

EP 0 201 405 B1

Courier Press, Leamington Spa, England.

## Description

La présente invention concerne un dispositif de vissage à couple de serrage contrôlé, notamment pour le vissage d'un bouchon sur le col d'une bouteille.

On connaît des dispositifs de vissage à couple de serrage contrôlé qui sont utilisés en particulier pour le vissage de bouchons sur le col de bouteilles lors du conditionnement en série d'un produit liquide ou pulvérulent, ou encore pour le vissage de boulons sur une chaîne de fabrication en série.

Dans les dispositifs de vissage à couple de serrage contrôlé connus, des broches de vissage sont équipées de mâchoires mobiles commandées mécaniquement, la fonction de mesure du couple étant assurée par un embrayage à friction ou par un entraînement magnétique. Dans les deux cas, le couple est réglable soit par compression d'un ressort soit par modification du champ magnétique par éloignement des aimants.

Lorsque le couple prédéterminé est atteint, l'embrayage patine jusqu'au moment où la commande d'ouverture des mâchoires est actionnée, généralement après un temps de vissage déterminé à l'avance.

Il existe également des broches de vissage dans lesquelles les mâchoires s'ouvrent automatiquement lorsque le couple désiré est atteint, la mesure du couple se faisant par un dispositif de ressort à déclenchement complexe intégré à la broche de vissage. C'est le cas du dispositif décrit dans le document US—A—4,299,072.

Par ailleurs, tous ces dispositifs impliquent l'arrêt de la broche de vissage pour modifier le réglage du couple de serrage et, dans le cas d'une machine de vissage à haute cadence équipée de plusieurs broches, il est nécessaire d'effectuer un réglage pour chacune des broches successivement. Ces contraintes sont généralement mal acceptées par les opérateurs chargés de faire fonctionner la machine et les arrêts de la machine diminuent le rendement global de celle-ci. De plus, dans le cas d'un embrayage à friction, le patinage de l'embrayage entraîne progressivement une usure ou un échauffement de celui-ci et donc une imprécision du couple de serrage.

Un but de la présente invention est de proposer un dispositif de vissage à couple de serrage contrôlé qui soit de structure simple et dont les caractéristiques de fonctionnement soient constantes quelles que soient les conditions d'utilisation.

Un autre but de la présente invention est de proposer un dispositif de vissage à couple de serrage contrôlé dont le couple, dans le cas d'une machine équipée de plusieurs broches, puisse être réglé sur toutes les broches par un seul réglage.

En vue de la réalisation de ces buts, on prévoit selon l'invention un dispositif de vissage à couple de serrage contrôlé comportant une broche de vissage montée sur un châssis pour se déplacer selon un mouvement de translation alterné par rapport au châssis et pour tourner autour d'un axe de rotation, cette broche comportant des mâchoires de préhension et des moyens de commande des mâchoires de préhension; un pignon d'entraînement en rotation de la broche; un pignon de broche fixé à la broche coaxialement à celle-ci; et un pignon intermédiaire disposé entre le pignon d'entraînement et le pignon de broche, caractérisé en ce que l'axe du pignon intermédiaire est porté par un support mobile par rapport aux axes du pignon de broche et du pignon d'entraînement selon une direction normale à ceux-ci, et en ce que le dispositif comporte des moyens de rappels élastiques du support mobile vers une position de repos, ces moyens de rappel étant disposés entre le châssis et le support mobile, et des moyens de détection des déplacements du support mobile, ces moyens de détection étant reliés aux moyens de commande des mâchoires de préhension.

Ainsi, lorsque le couple de serrage correspondant à la force des moyens de rappel est atteint, le pignon intermédiaire se déplace et les moyens de détection provoquent l'ouverture des mâchoires interrompant ainsi le serrage.

Selon une caractéristique avantageuse de l'invention, le dispositif de vissage comporte des moyens de réglage des moyens de rappel. Ainsi, on peut modifier à volonté le couple de serrage en agissant sur le réglage des moyens de rappel.

Selon une autre caractéristique avantageuse de l'invention, le pignon intermédiaire est fixé à une biellette montée sur un axe de pivotement porté par le châssis. Ainsi, le pignon intermédiaire est soumis à la seule contrainte des moyens de rappel et il est donc possible de déterminer le couple de serrage avec une grande précision.

Selon un mode de réalisation préféré de l'invention, la biellette comporte une partie courte et une partie longue, et le pignon intermédiaire et les moyens de détection sont respectivement disposés au voisinage d'une extrémité de la partie courte et de la partie longue. Ainsi, pour un faible déplacement du pignon intermédiaire on obtient un grand déplacement de l'extrémité de la partie longue et donc une meilleure précision de la détection de ce déplacement.

Selon un autre aspect préféré de l'invention, les moyens de rappel comportent un ressort disposé entre une butée solidaire du châssis et une butée solidaire de la biellette et, dans le cas d'un dispositif comportant une série de broches montées sur un même châssis, les butées solidaires du châssis associé à chaque broche sont fixées à une couronne mobile ellemême solidaire du châssis. Ainsi, par une seule opération de positionnement de la couronne mobile, on détermine la position de chacune des butées solidaires du châssis et donc le couple de serrage de chacune des broches.

D'autres caractéristiques et avantages de la présente invention apparaîtront encore à la lecture de la description qui suit d'exemples particuliers de réalisation en liaison avec les figures parmi lesquelles:

la figure 1 est une vue de dessus partielle d'un mode de réalisation de l'invention, en coupe selon la ligne I—I de la figure 2;

la figure 2 est une vue en coupe partielle du dispositif de la figure 1 selon la ligne II—II de la figure 1;

la figure 3 est une vue en coupe partielle selon la ligne III—III de la figure 1;

la figure 4 est une vue de côté partielle d'une première variante de réalisation de l'invention;

la figure 5 est une vue de côté partielle d'une seconde variante de réalisation de l'invention;

la figure 6 est une vue de dessus schématique partielle d'un carrousel à plusieurs broches comportant un dispositif de vissage selon l'invention.

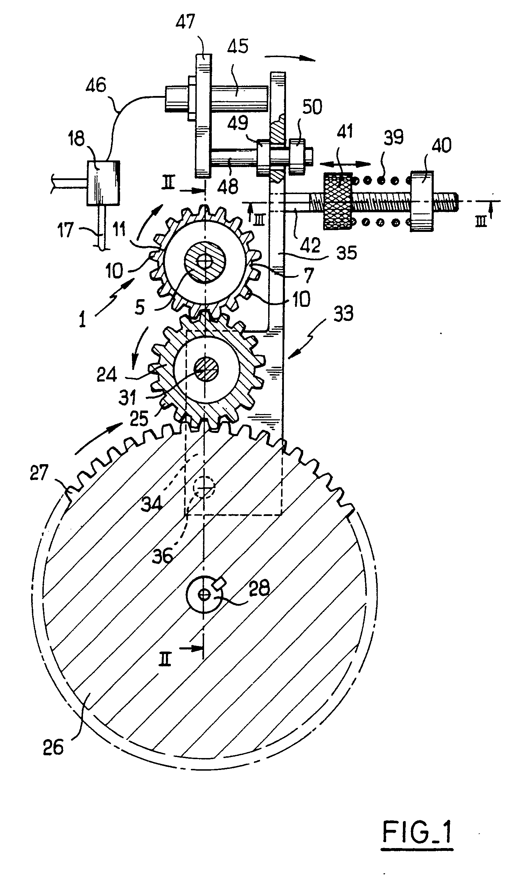

En référence aux figures 1 à 3, le dispositif de vissage à couple de serrage contrôlé comporte au moins une broche de vissage généralement désignée en 1 montée sur une plaque 2 solidaire du châssis pour se déplacer selon un mouvement de translation alterné par rapport au châssis et pour tourner autour d'un axe de rotation. Pour cela, la broche 1 comporte de façon classique un tube support 3 fixé à la plaque 2 dans lequel coulisse une tige support creuse 4 comportant par exemple à sa partie supérieure (non représentée) un système de came provoquant un mouvement de translation alterné de la tige support 4. Un arbre de broche creux 5 est monté à la partie inférieure de la tige support 4 au moyen d'une tige filetée 6 6 permettant de bloquer l'arbre 5 par rapport à la tige support 4. Un pignon de broche 7 est monté sur l'arbre 5 par l'intermédiaire de roulements 8 maintenus espacés l'un de l'autre par une entretoise 9. Le pignon de broche 7 comporte une série de dents 10 sur sa surface extérieure.

A sa partie inférieure, le pignon de broche 7 comporte un alésage 11 dans lequel est disposé un piston 12 monté de façon étanche à l'intérieur de l'alésage 11 au moyen d'un joint torique 13. Le piston 12 est rappelé vers le haut par un ressort 14 s'appuyant à son extrémité supérieure sur un épaulement du piston 12 et à son extrémité inférieure sur une collerette d'une pièce intermédiaire 15. Un conduit interne 16 de l'arbre de broche 5 débouche à sa partie inférieure dans l'alésage 11 et est relié à sa partie supérieure à une source de fluide sous pression (non représentée), par exemple une source d'air comprimé, par une canalisation 17 sur laquelle est montée une électrovanne de commande 18.

Un support de mâchoire 19 est monté à la partie inférieure de la pièce intermédiaire 15 au moyen d'un écrou 20. Des mâchoires 21 sont montées sur des axes 22 et sont rappelées vers une position ouverte par un jonc torique élastique 23.

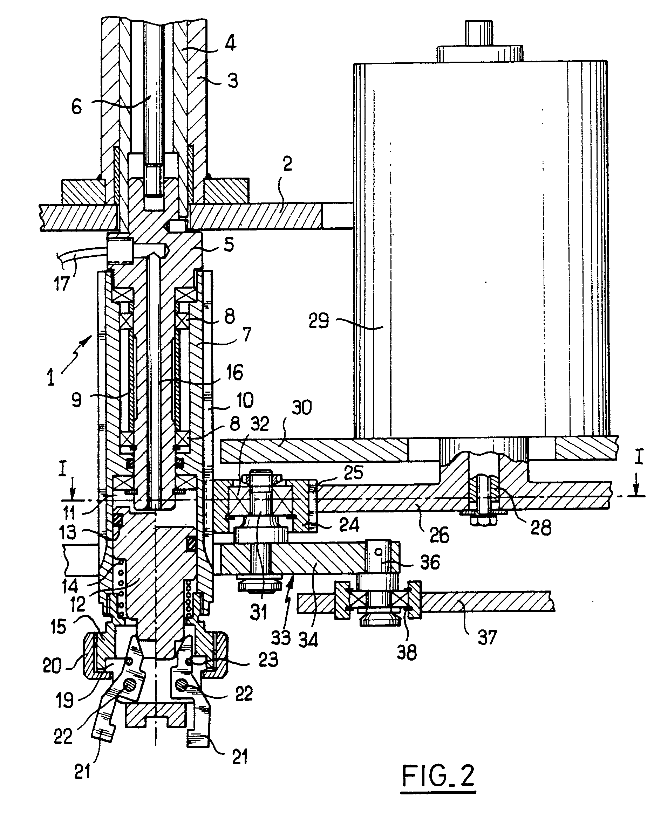

Pour illustrer le fonctionnement de la broche, on a représenté sur la figure 2 une demi-coupe gauche de la broche avec le piston en position haute et une demi-coupe droite avec le piston en position basse. Dans la position haute du piston, les mâchoires 21 sont rappelées en butée contre la partie inférieure du piston 12 par le jonc élastique 23 et les mâchoires sont maintenues ouvertes. Lors de l'admission de fluide sous pression dans l'alésage 11, le piston s'abaisse et repousse l'extrémité supérieure des mâchoires 21 refermant ainsi les mâchoires 21 sur l'objet à visser amené en position entre les mâchoires par un dispositif d'alimentation classique non représenté.

Le pignon de broche 7 est entraîné en rotation par un pignon intermédiaire 24 comportant des dents périphériques 25 lui-même entraîné en rotation par un pignon d'entraînement 26 comportant des dents périphériques 27. Le pignon d'entraînement 26 est monté sur l'arbre 28 d'un moteur 29 fixé sur une plaque 30 formant une partie du châssis.

Le pignon intermédiaire 24 est monté pour tourner librement sur un axe 31 par l'intermédiaire d'un roulement 32. L'axe 31 est lui-même monté sur un support mobile généralement désigné en 33. Dans le mode de réalisation représenté sur les figures 1 et 2, le support mobile 33 est une biellette comportant une partie courte 34 et une partie longue 35. L'axe 31 est porté par une extrémité de la partie courte 34. L'extrémité de la partie courte 34 opposée à celle qui porte l'axe 31 est montée sur un axe de pivotement 36 qui pivote librement sur une plaque 37 solidaire du châssis par l'intermédiaire d'un roulement 38. L'axe 31 du pignon intermédiaire 24 et l'axe de pivotement 36 de la biellette 33 sont de préférence sensiblement coplanaires avec l'axe de rotation de la broche 1 et l'axe du pignon d'entraînement 26.

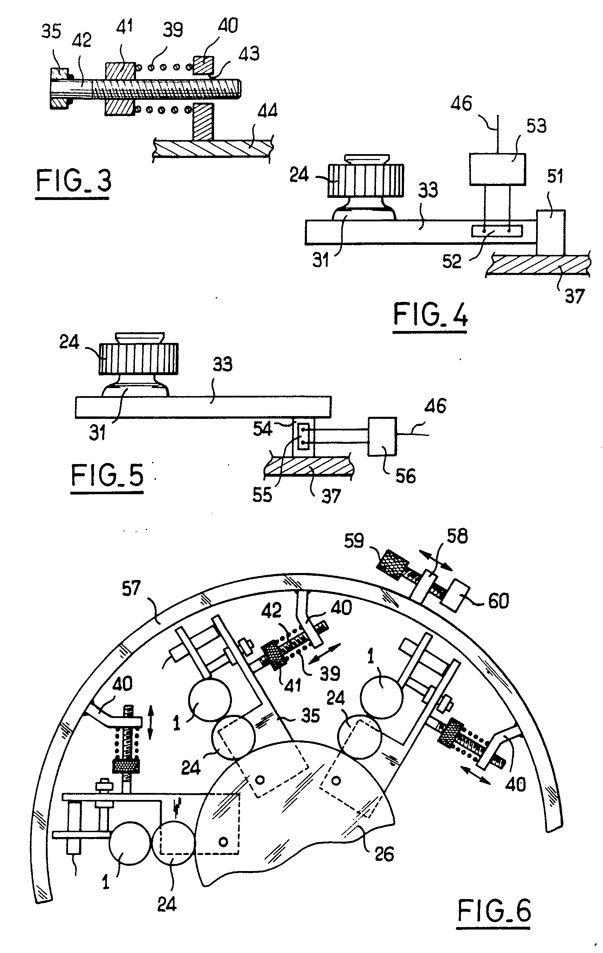

La biellette 33 formant support mobile est ramenée vers une position de repos par des moyens de rappel formés par un ressort hélicoïdal 39 disposé entre une butée 40 solidaire du châssis et une butée 41 solidaire de la biellette 33. Dans le mode de réalisation représenté, la butée solidaire de la biellette est un écrou 41 monté de façon réglable sur une tige filetée 42 s'étendant transversalement à la partie longue 35 de la biellette 33. Ainsi qu'on peut le voir sur la figure 3, la tige filetée 42 peut se déplacer librement à travers une ouverture 43 de la butée 40 elle-même fixée à une plaque 44 solidaire du châssis. On comprend donc que la force de rappel s'exerçant sur le support mobile 33 peut être réglée en déplaçant l'écrou 41.

A l'extrémité de la partie longue 35, le dispositif comporte des moyens de détection des déplacements du support mobile 33 formés par un détecteur de proximité 45, par exemple du type capacitif, relié à l'électrovanne 18 par un fil 46. Le détecteur de proximité 45 est monté sur une plaque 47 solidaire du châssis. La plaque 47 porte également une tige filetée 48 traversant la partie longue 35 de la biellette 33 et supportant des écrous 49 et 50 servant de butée pour la partie longue 35 de la biellette 33.

Le fonctionnement du dispositif est le suivant: au début du vissage, le ressort 39 maintient la partie longue 35 de la biellette 33 en butée sur l'écrou 49. Le détecteur 45 détecte la proximité de l'extrémité de la partie 35 et envoie à l'électrovanne 18 un signal autorisant l'alimentation en fluide sous pression maintenant le piston 12 en position basse. Les mâchoires 21 sont serrées sur l'objet à visser, par exemple un bouchon et celui-ci est donc entraîné en rotation par le pignon 7 lui-même entraîné par le pignon intermédiaire 24 et le pignon d'entraînement 26. En fin de vissage, le couple sur les différents pignons augmente et, lorsque le couple devient supérieur à la force de rappel exercée par le ressort 39, le pignon 24 roule sur le pignon 7 sur une distance autorisée par le jeu existant entre les dents 25 et 27.

Dans ce mouvement, la biellette 33 pivote autour de l'axe 36 et la partie longue 35 de la biellette 33 s'écarte du détecteur de proximité 45. Le signal transmis à l'électrovanne 18 s'interrompt ce qui entraîne la mise à l'air libre de l'alésage 11 et par conséquent la remontée du piston 12 et l'ouverture des mâchoires 21. La butée 50 sur laquelle vient s'appuyer la partie 35 de la biellette 33 permet d'éviter un mouvement trop important du pignon 24 qui provoquerait un coincement entre les dents 25 et 27, ce qui provoquerait un blocage du mécanisme.

Dans la variante de réalisation représentée sur la figure 4, le pignon intermédiaire 24 est porté par une biellette 33 formée par un barreau légèrement flexible encastré à son extrémité opposée à l'axe 31 dans un bossage 51 fixé sur la plaque 37. La détermination du déplacement de la biellette 33 est obtenue cette fois par une jauge de contrainte 52 fixée de préférence sur le côté de la biellette 33 au voisinage de son encastrement dans le bossage 51. La jauge de contrainte 52 est reliée à un dispositif électronique 53 dont la sortie est reliée à la ligne 46. Ainsi, la détermination du couple d'ouverture des mâchoires 21 est obtenue en agissant sur les paramètres du circuit électronique 53. A titre d'exemple, le circuit électronique 53 peut être un amplificateur à gain variable.

Dans la variante de réalisation représentée sur la figure 5, le pignon 24 est monté sur une poutrelle rigide 33 dont l'extrémité opposée à l'extrémité qui porte l'axe 31 est fixée à une tige 54 flexible en torsion et fixée à la plaque 37. Les déplacements de la poutrelle 33 sont détectés par une jauge de torsion 55 fixée sur le côté de la tige 54 et reliée à un dispositif électronique 56 dont la sortie est branchée à la ligne 46.

La figure 6 représente un mode préféré de réalisation lorsque le dispositif de vissage comporte une série de broches de vissage montées sur un même châssis, par exemple un carrousel rotatif. Chaque broche de vissage 1 est associée à un pignon intermédiaire 24 porté par une biellette 33. Chaque biellette 33 comporte des moyens de rappel et des moyens de détection analogues à ceux qui ont déjà été décrits en liaison avec les figures 1 à 3. Toutefois, dans cette variante, chacune des butées 40 solidaire du châssis n'est plus fixée directement à une plaque 44 mais à une couronne mobile 57 comportant en un point de sa circonférence un bossage 58 traversé par une vis 59 qui s'appuie sur une butée 60 fixée au châssis. On voit immédiatement que dans ce mode de réalisation l'écrou 41 va permettre d'effectuer un pré-réglage afin que pour une position donnée de la couronne 57 toutes les broches soient réglées au même couple de serrage. Une fois le pré-réglage effectué, on modifie à volonté le couple de serrage de l'ensemble des broches en agissant sur la vis 59 qui déplace alors la couronne 57 et donc l'ensemble des butées 40 à l'encontre des ressorts 39.

Bien entendu l'invention n'est pas limitée aux modes de réalisation décrits ci-dessus et on peut y apporter de nombreuses variantes de réalisation sans sortir du cadre de l'invention.

En particulier, bien que le dispositif ait été décrit avec des détecteurs électroniques, on peut envisager une solution entièrement pneumatique en remplaçant l'électrovanne 18 par un relais pneumatique et le détecteur de proximité 45 par un détecteur fluidique. On peut également remplacer les ressorts 39 par des systèmes de fléau et contrepoids réglables à la façon d'une balance, ou par des vérins pneumatiques, le couple étant alors réglé par la pression d'alimentation.

Dans l'exemple de réalisation décrit en liaison avec les figures 1 à 3, les plaques supports 2, 30, 37 et 44 étaient supposées reliées à un châssis fixe, dans le cas d'un carrousel rotatif, ces plaques font bien entendu partie de la plate-forme rotative du carrousel. A ce propos on notera que le mouvement de vissage des pignons de broches 7 peut être obtenu soit en montant le pignon d'entraînement 26 sur l'axe d'un moteur 29 comme cela a été décrit ou encore en déplaçant les broches par rapport à un pignon fixe.

**Revendications**

1. Dispositif de vissage à couple de serrage contrôlé comportant une broche de vissage (1) montée sur un châssis (2) pour se déplacer selon un mouvement de translation alterné par rapport au châssis et pour tourner autour d'un axe de rotation, cette broche (1) comportant des mâchoires de préhension (21) et des moyens de commande (12, 18) des mâchoires de préhension; un pignon d'entraînement en rotation (26) de la broche (1); un pignon de broche fixé à la broche coaxialement à celle-ci; et un pignon intermédiaire (24) disposé entre le pignon d'entraînement (26) et le pignon de broche (1), caractérisé en ce que l'axe du pignon intermédiaire (24) est porté par un support (33) mobile par rapport aux axes du pignon de broche et du pignon d'entraînement selon une direction normale à ceux-ci, et en ce que le dispositif comporte des moyens de rappels élastiques du support mobile vers une position de repos, ces moyens de rappel étant disposés entre le châssis et le support mobile, et des moyens de détection (45) des déplacements du support mobile (33), ces moyens de détection (45) étant reliés aux moyens de commande des mâchoires de préhension (21).

2. Dispositif de vissage selon la revendication 1, caractérisé en ce qu'il comporte des moyens de réglage (41; 57) des moyens de rappel.

3. Dispositif de vissage selon la revendication 1 ou la revendication 2, caractérisé en ce que le pignon intermédiaire est fixé à une biellette (33) montée sur un axe de pivotement (36) porté par le châssis.

4. Dispositif de vissage selon la revendication 3, caractérisé en ce que l'axe (31) du pignon intermédiaire (24) et l'axe de pivotement (36) de la biellette (33) sont sensiblement coplanaires avec l'axe de rotation de la broche et l'axe du pignon d'entraînement (26).

5. Dispositif de vissage selon la revendication 3 ou la revendication 4, caractérisé en ce que la biellette (33) comporte une partie courte (34) et une partie longue (35) et en ce que le pignon intermédiaire (24) et les moyens de détection (45) sont respectivement disposés au voisinage d'une extrémité de la partie courte (34) et de la partie longue (35).

6. Dispositif de vissage conforme à l'une des revendications 3 à 5, caractérisé en ce que les moyens de rappel comportent un ressort (39) disposé entre une butée (40) solidaire du châssis et une butée (41) solidaire de la biellette.

7. Dispositif de vissage conforme à la revendication 6, caractérisé en ce que la butée (41) solidaire de la biellette est montée de façon réglable sur une tige (42) s'étendant transversalement à la biellette (33) et fixée à celle-ci.

8. Dispositif de vissage selon la revendication 6 ou la revendication 7 comportant une série de broches (1) montées sur le même châssis, chacune associée à un pignon intermédiaire (24) porté par une biellette (33), caractérisé en ce que les butées (40) solidaires du châssis sont fixées à une couronne mobile (57) elle même solidaire du châssis.

9. Dispositif de vissage selon la revendication 8, caractérisé en ce qu'il comporte des moyens (59) pour positionner la couronne (57) de façon réglable par rapport au châssis.

10. Dispositif de vissage selon la revendication 1, caractérisé en ce que le pignon intermédiaire (24) est porté par une biellette flexible fixée au châssis et en ce que les moyens de détection comportent une jauge de contrainte (52) fixée sur la biellette (33).

11. Dispositif de vissage selon la revendication 1, caractérisé en ce que le pignon intermédiaire (24) est porté par une biellette reliée au châssis par une tige flexible (54) et en ce que les moyens de détection comportent une jauge de torsion (55) fixée sur le côté de la tige flexible (54).

**Patentansprüche**

1. Schraubvorrichtung mit Drehmomentkontrolle, mit einer Schraubspindel (1), die auf einem Rahmen (2) befestigt ist, um sich entsprechend einer abwechselnden Translationsbewegung gegenüber dem Rahmen zu bewegen und um sich um eine Drehachse zu drehen, wobei die Schraubspindel (1) Klemmbacken (21) und eine Steuervorrichtung (12, 18) für die Klemmbacken aufweist, ein Antriebsritzel (26) zur Drehung der Schraubspindel (1), ein Schraubspindelritzel, das koaxial zur Schraubspindel an dieser befestigt ist, und ein Zwischenritzel (24), das zwischen dem Antriebsritzel (26) und dem Ritzel der Schraubspindel (1) angeordnet ist, dadurch gekennzeichnet, dass die Achse des Zwischenritzels (24) von einem Halter (33) getragen wird, der gegenüber den Achsen des Schraubspindelritzels und des Antriebsritzels in einer Richtung normal zu diesen beweglich ist, und dass die Schraubvorrichtung Einrichtungen zur federnden Rückholung des beweglichen Halters gegen eine Ruhestellung aufweist und diese Rückholeinrichtungen zwischen dem Rahmen und dem beweglichen Halter angeordnet sind, und Einrichtungen (45) zur Erfassung der Bewegungen des beweglichen Halters (33), und dass diese Erfassungseinrichtungen (45) mit den Steuereinrichtungen der Klemmbacken (21) verbunden sind.

2. Schraubvorrichtung nach Anspruch 1, dadurch gekennzeichnet, dass sie Einrichtungen (41; 57) zur Regulierung der Rückholeinrichtungen aufweist.

3. Schraubvorrichtung nach Anspruch 1 oder 2, dadurch gekennzeichnet, dass das Zwischenritzel (24) an einer Kurbelstange (33) befestigt ist, die auf einer vom Rahmen getragenen Schwenkachse (36) montiert ist.

4. Schraubvorrichtung nach Anspruch 3, dadurch gekennzeichnet, dass die Achse (31) des Zwischenritzels (24) und die Schwenkachse (36) der Kurbelstange (33) im wesentlichen in einer Ebene mit der Drehachse der Schraubspindel (1) und der Achse des Antriebsritzels (26) liegen.

5. Schraubvorrichtung nach Anspruch 3 oder 4, dadurch gekennzeichnet, dass die Kurbelstange (33) einen kurzen Abschnitt (34) und einen langen Abschnitt (35) aufweist, und dass das Zwischenritzel (24) und die Erfassungseinrichtungen (45) jeweils in der Nachbarschaft eines Endes des kurzen Abschnittes (34) und des langen Abschnittes (35) liegen.

6. Schraubvorrichtung nach einem der Ansprüche 3 bis 5, dadurch gekennzeichnet, dass die Rückholeinrichtungen eine Feder (39) aufweisen, die zwischen einem mit dem Rahmen fest verbundenen Anschlag (40) und einem mit der Kurbelstange fest verbundenen Anschlag (41) liegen.

7. Schraubvorichtung nach Anspruch 6, dadurch gekennzeichnet, dass der mit der Kurbelstange fest verbundene Anschlag (41) in einstellbarer Weise auf einem Stab (42) befestigt ist, der sich quer zur Kurbelstange (33) erstreckt und an dieser befestigt ist.

8. Schraubvorrichtung nach Anspruch 6 oder 7, mit einer Reihe Schraubspindeln (1), die auf dem gleichen Rahmen montiert sind und wovon jede einem Zwischenritzel (24) zugeordnet ist, das von einer Kurbelstange (33) getragen wird, dadurch gekennzeichnet, dass die mit dem Rahmen fest verbundenen Anschläge (40) an einem beweglichen Kranz (57) befestigt sind, der selbst fest mit dem Rahmen verbunden ist.

9. Schraubvorrichtung nach Anspruch 8, dadurch gekennzeichnet, dass sie Einrichtungen (59) zur einstellbaren Positionierung des Kranzes (57) gegenüber dem Rahmen aufweist.

10. Schraubvorrichtung nach Anspruch 1, dadurch gekennzeichnet, dass das Zwischenritzel (24) von einem am Rahmen befestigten, biegsamen Kurbelarm getragen wird, und dass die Erfassungseinrichtungen einen an der Kurbelstange (33) befestigten Dehnungsmessstreifen (52) umfassen.

11. Schraubvorrichtung nach Anspruch 1, dadurch gekennzeichnet, dass das Zwischenritzel (24) von einer Kurbelstange getragen wird, die mit dem Rahmen mittels einer biegsamen Stange (54) verbunden ist, und dass die Erfassungseinrichtungen einen Torsionsmessstreifen (55) umfassen, der an der Seite der biegsamen Stange (54) befestigt ist.

## Claims

1. Screwing device with controlled tightening torque comprising a screwing pin (1) mounted on a frame (2) for alternate translational movement with respect to said frame and for pivoting about a rotation axis, said pin (1) including gripping jaws (21), and control means (12, 18) of said gripping jaws; a rotation driving gear (26) for said pin (1); a pin gear secured to said pin coaxially thereto; and an intermediate gear (24) positioned between said driving gear (26) and said pin gear (1) characterized in that the axis of said intermediate gear (24) is supported by a support (33) movable with respect to axes of said pin gear and said driving gear according to a direction normal thereto, and in that the device includes resilient means for biasing said movable support towards a rest position, said biasing means being disposed between said frame and said movable support, and detection means (45) for detecting displacements of said movable support (33), said detection means (45) being connected to said control means of said gripping jaws (21).

2. Screwing device according to claim 1 characterized in that it includes means (41; 57) for setting said biasing means.

3. Screwing device according to claim 1 or claim 2 characterized in that said intermediate gear is secured to a rod (33) mounted on a pivoting axis (36) supported by said frame.

4. Screwing device according to claim 3 characterized in that the axis (31) of said intermediate gear (24) and the pivoting axis (36) of said rod (33) are substantially coplanar with said rotation axis of said pin and the axis of said driving gear (26).

5. Screwing device according to claim 3 or claim 4 characterized in that said rod (33) includes a short portion (34) and a long portion (35) and in that said intermediate gear (24) and said detecting means (45) are respectively positioned adjacent to an end of said short portion (34) and said long portion (35).

6. Screwing device according to one of claims 3 to 5 characterized in that said biasing means include a spring (39) positioned between a stop (40) secured to said frame and a stop (41) secured to said rod.

7. Screwing device according to claim 6 characterized in that said stop (41) secured to said rod is adjustably mounted on an arm (42) extending transversely to said rod (33) and secured thereto.

8 Screwing device according to claim 6 or claim 7, including a plurality of pins (1) mounted on the same frame, each associated to an intermediate gear (24) supported by a rod (33) characterized in that said stops (40) secured to said frame are fixed to a movable crown (57) which is itself secured to said frame.

9. Screwing device according to claim 8 characterized in that it includes means (59) for adjustably positioning said crown (57) with respect to said frame.

10. Screwing device according to claim 1 characterized in that the intermediate gear (24) is supported by a flexible rod secured to said frame and in that said detection means include a strain gauge (52) secured to said rod (33).

11. Screwing device according to claim 1 characterized in that said intermediate gear (24) is supported by a rod connected to said frame through a flexible arm (54) and in that said detection means include a torsion gauge (55) secured to one side of said flexible arm (54).

6

<u>FIG_1</u>

FIG. 2

FIG_3

FIG_4

FIG_5

FIG_6